# EUROPEAN PATENT SPECIFICATION

(11) **EP 3 144 487 B1**
(45) Date of publication and mention of the grant of the patent: **22.04.2020**
(21) Application number: 16188334.3
(22) Date of filing: 12.09.2016
(51) Int. Cl.: F01D 25/16, F02C 7/36, F02C 3/107, F02C 7/06

(54) **A COUPLING FOR A GEARED TURBO FAN**
KOPPLUNG FÜR EINEN GETRIEBEFAN
ACCOUPLEMENT POUR UNE TURBOSOUFFLANTE À RÉDUCTEUR

(30) Priority: 18.09.2015 GB 201516571
(43) Date of publication of application: 22.03.2017
(73) Proprietor: Rolls-Royce plc, London N1 9FX (GB)
(72) Inventor: Swift, Andrew, Derby DE24 8BJ (GB); Thornton, Stewart, Derby DE24 8BJ (GB); Simms, Paul, Derby DE24 8BJ (GB); Knight, Glenn, Derby DE24 8BJ (GB)
(74) Representative: Rolls-Royce plc

(56) References cited:
- EP-A1- 2 360 391
- EP-A1- 2 915 962
- EP-A2- 1 777 380
- WO-A1-2014/158439
- US-A1- 2014 227 084
- US-B1- 6 394 387
- US-B2- 8 939 864

## Description

### Technical Field of Invention

This invention relates to a coupling for a geared turbofan in which a reduction gearbox is used to provide a drive of the propulsive fan. The coupling is configured to reduce loads and deflections being transmitted from the shaft into the gearbox, whilst transmitting torque between the gearbox and the shaft system.

### Background of Invention

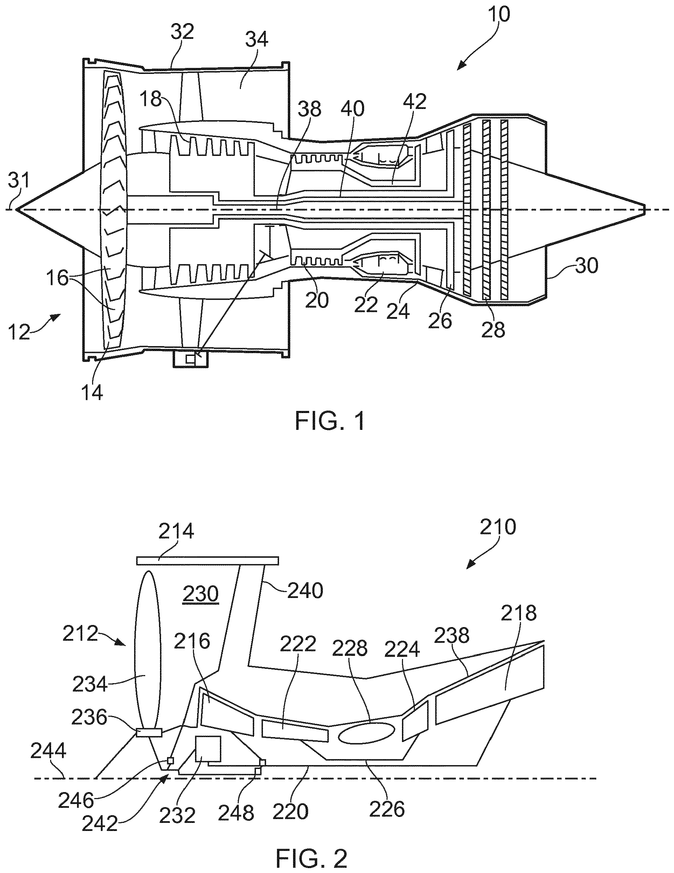

Figure 1 shows a ducted fan gas turbine engine 10 comprising in axial flow series: an air intake 12, a propulsive fan 14 having a plurality of fan blades 16, an intermediate pressure compressor 18, a high-pressure compressor 20, a combustor 22, a high-pressure turbine 24, an intermediate pressure turbine 26, a low-pressure turbine 28 and a core exhaust nozzle 30. A nacelle (not shown) generally surrounds the fan casing 32 and engine 10 and defines the intake 12, a bypass duct 34 and a bypass exhaust nozzle. The engine has a principal axis of rotation 31.

Air entering the intake 12 is accelerated by the fan 14 to produce a bypass flow and a core flow. The bypass flow travels down the bypass duct 34 and exits the bypass exhaust nozzle 36 to provide the majority of the propulsive thrust produced by the engine 10. The core flow enters in axial flow series the intermediate pressure compressor 18, high pressure compressor 20 and the combustor 22, where fuel is added to the compressed air and the mixture burnt. The hot combustion products expand through and drive the high, intermediate and low-pressure turbines 24, 26, 28 before being exhausted through the nozzle 30 to provide additional propulsive thrust. The high, intermediate and low-pressure turbines 24, 26, 28 respectively drive the high and intermediate pressure compressors 20, 18 and the fan 14 by concentric interconnecting shafts 38, 40, 42.

The functional requirements of the fan structure and transmission systems of the fan include amongst others: reacting the fan thrust, radial and couple loads; transmitting the power from the turbine to the fan; and transferring structural loads to the engine casing, nacelle and ultimately airframe.

The loads from the fan rotor are transmitted to the engine structure by the use of bearings. The bearings and general shafting arrangement are a key component to address the reaction of loads and transmitting of power to the fan from the turbine.

Typically, the LP system of a direct drive turbofan such as that shown in Figure 1 consists of fan and turbine rotors connected by a shaft which is supported in the engine structure by a combined bearing support system. The bearing support system usually comprises two or three bearings for the whole LP system. The bearings are typically positioned towards the ends of the respective shaft and optionally at a mid-portion depending on the specific requirements of the engine.

Current trends in gas turbine engines are moving towards so-called geared turbofan engines in which the fan is driven through a reduction gear train. The gear train allows the low pressure spool to be driven at higher rotational speeds which provides for a more efficient lighter engine core, whilst reducing the speed of the fan allows it to be a larger diameter thereby providing a higher bypass ratio. The reduction gear trains may be epicyclic in which the fan is driven via the carrier of a planetary configuration or a star configuration in which the planet gears are fixed, the fan shaft being driven by the ring or star gear. The gear train may be a compound configuration as known in the art.

However, the introduction of the reduction gearing leads to a more complex bearing support system in which the low pressure spool, gear train and fan all require bearing support.

EP2915962A1 describes a gas turbine engine which includes a fan section having a fan hub and a speed reduction device. A first fan bearing for supporting rotation of the fan hub is connected aft of the speed reduction device. A second fan bearing for supporting rotation of the fan hub is connected aft of the speed reduction device. A first outer race of the first fan bearing is attached to the fan hub.

US2014/227084A1 describes a compound gear system which includes a sun gear rotatable about a first axis that drives a first plurality of star gears rotatable about a plurality of fixed axes. The first plurality of star gears drives a second plurality of star gears spaced axially apart from the first plurality of star gears. The second plurality of star gears drive the ring gear that in turn drives a fan drive shaft.

EP2360391A1 describes an epicyclic gear train which includes planetary gears rotatably mounted on spindles supported by an annular carrier and including axially spaced apart forward and aft sets of output teeth extending radially outwardly from a planetary gear hub and axially spaced apart forward and aft roller bearings disposed between planetary gears and spindles. The forward and aft roller bearings are axially aligned with or adjacent to spaced apart forward set of output teeth and input gear respectively. A ring gear meshes with forward set of output teeth and an external gear meshes with aft set of output teeth. An input gear fixedly attached to hub aft of aft set of output teeth and engaged with a sun gear.

The present invention seeks to provide an improved shafting arrangement which allows for improved bearing support.

### Statements of Invention

The present invention provides a gas turbine engine according to the appended claims.

Thus there is a gas turbine engine, comprising: a low pressure spool having a low pressure compressor and a low pressure turbine connected by a low pressure shaft; a reduction gear train having a sun gear, a carrier having a plurality of planet gears attached thereto, and a ring gear, wherein the sun gear is connected to the low pressure shaft, and the carrier or the ring gear provides an output drive; a propulsive fan mounted fore of the gear train; a fan shafting arrangement comprising a fan shaft which is connected to the output drive of the gear train via a coupling, wherein the coupling includes a connection point to the fan shaft at a first end, and a connection point to the gear train at a second end and wherein the first end and second end are axial separated and radially separated and the axial separation is greater than the radial separation, the coupling being torsionally rigid but flexible in the radial direction, the fan shaft having two axially separated bearing locations so as to be supported by a first bearing and a second bearing which are axially separated wherein the first end of the coupling attaches to the fan shaft between the first and second bearings, characterised in that the fan shaft further comprises a fan support shaft which passes through the sun gear so as to have no direct contact therewith and as such passes through the centre of the gear train along the axis of rotation of the gearbox and fan, and the first end of the coupling attaches to the fan shaft between the first bearing and the gear train, and the second bearing is aft of the gear train.

The profile of the coupling in the longitudinal section relative to the principal axis of the engine may include an outward sweep such that the increase in radius of the coupling from the first end is greater than the axial separation from the first end.

The profile of the coupling may have a predominantly constant shear stress profile.

The reduction gear train may be an epicyclic gear box in which the output drive is the carrier, the sun gear provides an input drive and the fan support shaft passes through the centre of the sun gear.

The coupling may include a portion which extends axially forward of the first end. The curvature of the outward sweep may be continuous. The curvature may be greatest towards the first end.

The output drive may include a fore drive arm and an aft drive arm which are located respectively forward and aft of the gear train, wherein the fore and aft drive arms connect to respective sides of the carrier, and wherein the fore drive arm includes a radial expansion which extends between the second end of the coupling and the carrier.

The connection between the fan shaft and coupling at the first end may be located at a point of least operational radial, rotational and/or angular deflection.

The point of least operational radial, rotational and/or angular deflection may be taken to be the point of mean least deflection over an operational envelope.

The mean diameter of the coupling (348) may be radially larger than half the maximum radial diameter of the coupling.

The coupling (348) may be axially and radially segmented, each segment having a straight section in longitudinal profile.

Within the scope of this application it is expressly envisaged that the various aspects, embodiments, examples and alternatives, and in particular the individual features thereof, set out in the preceding paragraphs, in the claims and/or in the following description and drawings, may be taken independently or in any combination where technically compatible, unless otherwise stated.

### Description of Drawings

Embodiments of the invention will now be described with the aid of the following drawings of which:
Figure 1 shows convention gas turbine engine as described above in the background section.
Figure 2 shows a schematic section of a geared turbo fan arrangement.
Figure 3 shows a partial section of a geared turbo fan shafting arrangement.
Figure 4 shows an alternative arrangement of a geared turbo fan shafting arrangement.
Figure 5 shows a yet further alternative arrangement of a geared turbo fan shafting arrangement.
Figure 6 shows another alternative arrangement of a geared turbo fan shafting arrangement.
Figure 7 shows a further alternative arrangement of a geared turbo fan shafting arrangement.
Figures 8 to 10 show alternative arrangements of couplings.

### Detailed Description of Invention

Figure 2 shows a geared gas turbine engine 210 having low and high pressure spools, each having respective compressors and turbines driveably interconnected by respective shafts. Thus, there is a low pressure compressor 216 connected to the low pressure turbine 218 via a low pressure shaft 220, and a high pressure compressor 222 connected to a high pressure turbine 224 via a high pressure shaft 226. The low 216 and high 222 pressure compressors progressively compress air from an inlet downstream of a fan 212 to an outlet in flow proximity to the combustor 228. Compressed air flows from the high pressure compressor 222 to the combustor 228 in which fuel is added to the air and the mixture burnt. The combusted air then expands through the high 224 and low 218 pressure turbines in flow series. The low 220 and high 226 pressure shafts interconnecting the respective turbines and compressors provide the drive for the compressors.

The fan 212 is located at the front of the engine 210 to provide air for the inlet of the compressors and the main propulsive flow down the bypass duct 230. The fan 212 is driveably connected to the low pressure shaft 220 via a gear train 232 in the form of an epicyclic reduction gear box. The gear train 232 is located between the low pressure shaft 220 and the fan 212 and is arranged to reduce the speed of the fan 212 relative to the speed of the low pressure turbine 224. Such an arrangement allows for a higher speed and more efficient low pressure turbine 218, and slow spinning larger fan which can provide a higher bypass ratio. This freedom allows the speed of the fan and low pressure turbine to be independently optimised.

The fan 212 has a plurality fan blades 234 extending radially from a hub 236 which is mounted so as to rotate about the principle axis of the engine 210. The fan 212 resides within a fan casing 214 which partially defines the bypass duct 230. An engine casing 238 surrounds the engine core which comprises the low and high pressure spools and combustor 228. The engine casing generally provides containment and structural support for the engine core. The engine casing 238 is ultimately attached to and supported by the wing of the aircraft via an appropriate arrangement of struts 240 which extend across the bypass duct 230 and the nacelle which attaches to a pylon as is well known in the art.

The gear train 232 is in the form of an epicyclic reduction gearbox which is driven in a planetary configuration. The gear train 232 includes a ring or annular gear which is held substantially stationary in relation to the engine, a planet gear set with individual planets gears interconnected via a carrier, and a sun gear. The sun gear is rotatably connected to the low pressure shaft. The fan is connected to the output shaft of the gearbox which is in the form of the carrier of the planet gear via a fan shafting arrangement 242.

The fan shafting arrangement 242 is rotatable about and in some part defines the principal axis 244 of the geared gas turbine engine 210 and is supported by two axially separated bearings. Thus there is a front bearing 246 provided forward of the gear train 232 with respect to the flow direction of the engine, and a second bearing 248 positioned aft of the gearbox 232.

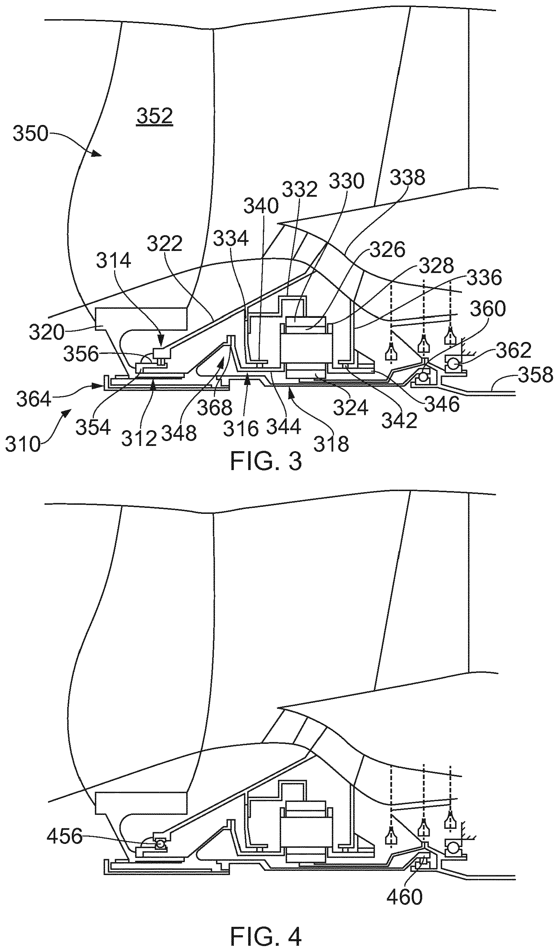

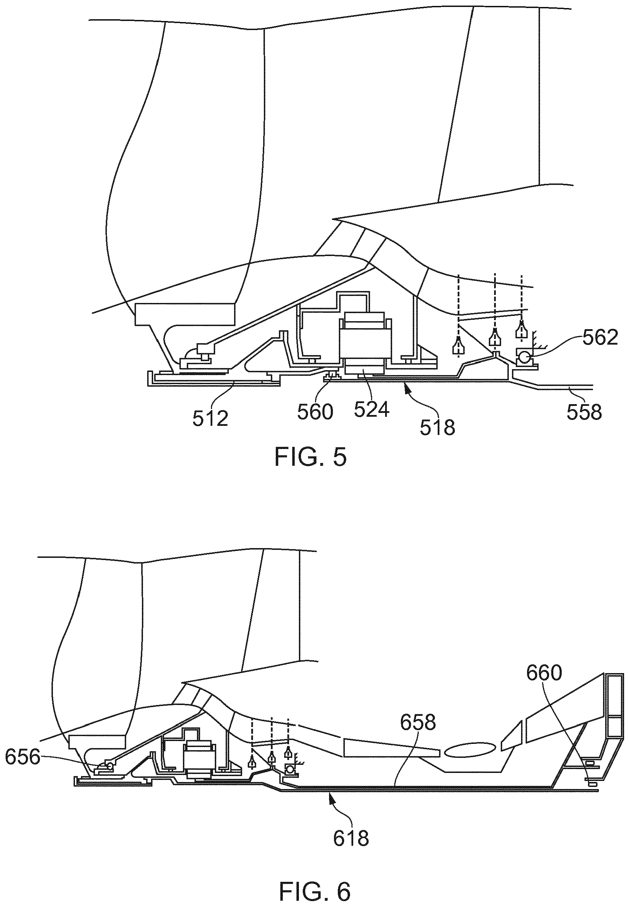

As will be seen from the following Figures 3 to 7, the fan shafting arrangement 242 typically comprises a fan shaft 312 which is independently rotatable from the low pressure shaft 358 by virtue of an intershaft bearing or by being coupled directly to the engine casing via a direct support which does not include the low pressure shaft. In some embodiments, the shafting arrangement may include a portion of the low pressure shaft as per Figure 5 which is described below. A notable feature of the shafting arrangement is that it has a support shaft which passes through the sun gear of the reduction gear.

Figure 3 shows a first fan shafting arrangement 310 in more detail. The shafting arrangement 310 includes: a fan shaft 312; a hub portion 320; a front bearing portion 314 which carries the front bearing 356 so as to radially support the fan shaft 312 via a support structure 322; a drive arm 316 which is attached to the carrier of the gear box and provides the drive for the fan, and a support shaft 318 which extends through the sun gear.

The gear train is an epicyclic reduction gearbox having a sun gear 324, planet gears 326 which are connected by a carrier 328, and a ring gear 330 which is secured to the engine structure via a ring gear support arm 332. The gearbox is held within a housing defined by fore 334 and aft 336 walls which extend radially from the engine casing 338 and terminate in bearings 340, 342 which engage with respective fore 344 and aft 346 portions of the drive arm 316.

The drive arm 316 extends along and is coaxial with the principal axis of the engine and is generally axi-symmetric. The drive arm 316 includes a coupling 348 and a carrier shaft which comprises a fore drive arm 344, the carrier 328 and an aft drive arm 346. It will be appreciated that the so-called aft drive arm does not carry any driving torque and is thus functionally a support shaft rather than a drive shaft per se.

The coupling 348 extends from a first end, which is attached to the main body of the fan shaft, to the fore drive arm 344. The attachment of the coupling to the fan shaft is dependent on many factors but will generally be placed at the point which minimises the radial deflections of the fan shaft which are transmitted to the gearbox. The coupling 348 helps isolate the gearbox from vibration, deflections and bending moments experienced by the fan when in use. Thus, the coupling is torsionally rigid but relatively flexible in the radial direction (and potentially other degrees freedom).

The fore 344 and aft 346 drive arms provide a single rotating structure with the carrier 328 to provide the carrier shaft. The carrier shaft is held in rotative alignment with the principle axis of the engine via the gearbox housing bearings 340, 342. It will be appreciated that other configurations of bearings may be used. For example, the bearings need not be attached to the housing of the gear box structure.

The fan 350 is mounted to the hub portion of the shafting arrangement. The hub portion 320 includes a radially outer body shaped to receive the root end of the fan blades 352 in a conventional manner. The hub portion 320 is mounted to the fan shaft 312 so as to be rotatably locked and so co-driven therewith about the principal axis of the engine.

The front bearing portion 354 is in the form of a small stub shaft which is concentrically nested around a shaft of the hub portion 320 and the fan shaft 312. The front bearing portion 354 provides the inner race of the front bearing. The platform is in the form of a cylindrical wall which is spaced from and radially outside of the outer surface of the fan shaft 312.

The inner race of the front bearing 356 is mounted to the outer surface of the front bearing stub shaft towards a distal end thereof. The radially outer race of the front bearing 356 is supported by a frustroconical support wall 322 which extends radially outwards and downstream from the bearing race and attaches to the engine casing local to the compressor inlet and first guide vane. Thus, the front bearing 356 provides radial support for the fan 350 and fan shaft 312 and reacts the load through the frustoconical wall 322.

In the described embodiment, the front bearing 356 is a roller bearing having an inner race, an outer race, a plurality of roller elements circumferentially distributed around the stub shaft and retained within a cage, as is known in the art. It will be appreciated that although a roller bearing is described in connection with the arrangement shown in Figure 3, other bearing types may be used. For example, the front bearing may be a thrust bearing as shown in later Figures. The thrust bearing may be a ball bearing or taper bearing as are known in the art.

In order to provide sufficient structural rigidity to the fan shaft and to allow it to react off-centre loading of the fan 352, the fan shaft 312 requires two axially separated bearing locations. The axially separated bearings allow bending moments in the fan shaft 312 to be safely reacted to the engine casing 338. In general, it is preferable from a structural loading point of view to place the bearings at certain minimal axial spacings which are dependent on the architecture of the engine and expected loads. Generally, the closer the bearings are, the larger the radial forces are on the bearings and structural supports. Providing a front bearing support upstream of the gearbox and one downstream of the gearbox generally provides for a suitable axial spacing and preferable structural arrangement. Another option would be to place two bearings upstream of the gearbox, however, to provide sufficient spacing the fan would need to be placed further forward which introduces numerous deleterious effects on the engine structural system.

In order to provide fore and aft bearings, the fan shafting arrangement includes a support shaft 318 which passes through the centre of the gearbox. In the example shown, the support shaft 318 forms part of the fan shaft 312 and lies along the principle axis of the engine. The support shaft 318 passes freely through the sun gear 324 so as to have no direct contact therewith and so can be independently rotated and radially displaced relative to the sun gear and gearbox. Providing the support shaft through the sun gear and in structural isolation from the gearbox allows the radial loading and excursions on the fan shaft 312 to be taken out of the gearbox, vastly simplifying the mechanical requirements of the gearbox.

A first end of the support shaft 318 is located fore of the gearbox and is attached to a downstream end of the fan shaft 312, aft of the radially extending drive arm 316. A second end of the support shaft 318 is located on the downstream side of the gear train and terminates in the aft bearing which in the described example is an intershaft bearing arrangement 360. The intershaft bearing arrangement 360 resides between and allows relative rotation of the low pressure shaft 358 and the support shaft 318 whilst providing radial and axial restraint for the support shaft and fan shaft. The intershaft bearing arrangement includes an inner race, an outer race and a plurality of rolling elements in the form of ball bearings. Hence, the intershaft bearing is a thrust bearing and provides axial restraint of the fan shafting arrangement and the support shaft 318.

The intershaft bearing end of the support shaft is flared so as to provide a portion of wider diameter in the proximity of the bearing. The internal diameter of the flared portion is sufficient to receive the bearing and the opposing end of the low pressure shaft such that the bearing arrangement 360 is sandwiched therebetween with the support shaft 318 being on the radial outer thereof. Thus, the inner race is attached to the low pressure shaft 358, and the outer race is attached to the support shaft 318.

The low pressure shaft 358 lies along the principal axis of the engine and provides the driving connection between the low pressure compressor and low pressure turbine. The low pressure shaft 358 is radially and axially supported by appropriate bearings along the length thereof. As can be seen in Figure 3, one of these bearings is a thrust bearing 362 located towards the fore end of the shaft. The thrust bearing 362 provides radial and axial retention of the low pressure shaft 358 and also provides a stable location for the intershaft bearing 360 which is fore of the low pressure shaft bearing. The main thrust bearing 362 of the low pressure shaft 358 is attached to the engine casing via a suitable support structure. The outer race of the shafting arrangement intershaft 360 bearing is located immediately upstream of the main thrust bearing 362 on a dedicated flange which extends from the low pressure shaft. The low pressure shaft 358 includes a bridge in the form of a flared portion which sits radially outside of and envelops flared end of the support shaft 318 before reducing in diameter as it extends towards the attachment point with the sun gear 324. Thus, the support shaft is concentrically nested within the low pressure shaft downstream of the sun gear 324 and rotatably isolated therefrom.

A catcher shaft 364 is radially nested within the fan shaft 312. The catcher shaft 364 comprises a shaft body which may attach to the fan shaft 312 or support shaft 318 aft of the drive arm attachment point

The low pressure shaft 358 is made from two separate sections of shaft which join at the bridge portion, radially outside of the intershaft bearing 360. The joint is provided by a pair of axially opposing radial flanges which are bolted together in an abutting manner. The joint also provides a connection from which a low pressure drive arm extends and attaches to the compressor.

The fore and aft bearings between them provide radial, axial and couple retention of the fan and fan shaft. Thus, one of the bearings is a thrust bearing in the form of a ball bearing, and the other a roller bearing. As will be appreciated by the skilled person, the thrust bearing will provide the axial retention, the roller bearing will provide radial positioning only. Although the example shown in Figure 3 puts the thrust bearing as the aft bearing, and the roller bearing fore bearing, this need not be the case. Thus, Figure 4 shows the thrust 456 and radial 460 bearings interchanged between the fore and aft position. Hence, the fore bearing is the thrust bearing 456, and the aft bearing is the roller bearing 460. Outside of this difference, the two arrangements of Figures 3 and 4 are the same.

Figure 5 provides an alternative fan shafting arrangement in which the support shaft 518 is provided by the low pressure shaft 558 which passes through the sun gear. Here the intershaft bearing 560 between the low pressure shaft 558 and fan shaft 512 is placed upstream of the gearbox and allows for the differential in rotational speed. The support shaft is still independent from the gearbox and so radial forces/excursions in the fan 512 and support shafts 518 are not transferred to the gearbox. The low pressure shaft 558 includes the main thrust bearing 562 radially inwards of the low pressure compressor, as with the earlier described embodiments, however, the low pressure shaft 558 now includes an extension which passes fore of the main thrust bearing and through the sun gear 524 along the principle axis of the engine.

As with the previous examples, the low pressure shaft 558 still has a dedicated shaft portion for driving the sun gear 524. Hence there is a dual walled or nested low pressure shaft which extends from the main thrust bearing 562 to provide the radial isolation of the fan support shaft and low pressure drive shaft.

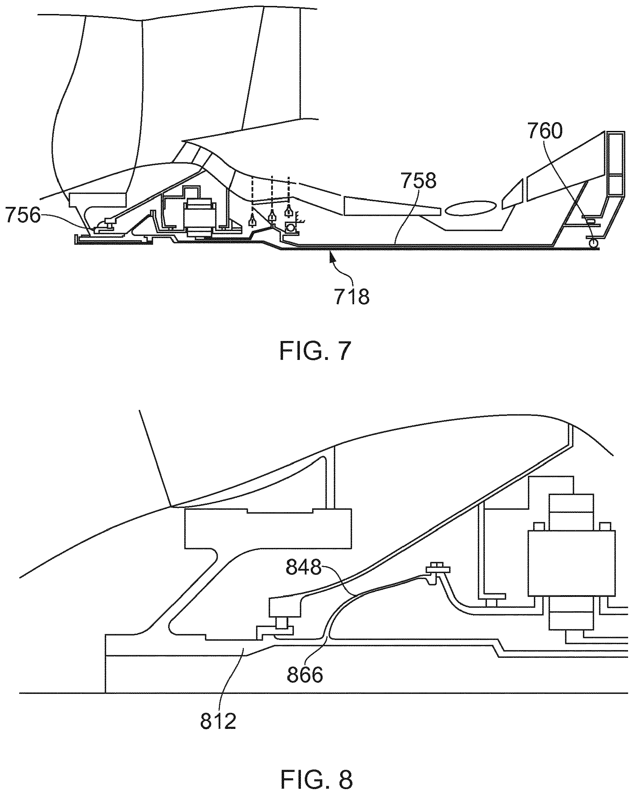

Figures 6 and 7 show yet further alternatives to the fan shafting arrangement in which the fan support shaft 618, 718 extends coaxially within the low pressure shaft 658, 758 to the downstream end thereof. Hence, the fan shafting arrangement is mechanically isolated from direct contact with the low pressure shaft 658, 758. The downstream end of the support shaft 618, 718 is supported by a bearing which appends from a support wall which is attached to the engine casing. The attachment may be downstream of the low pressure turbine.

In the example of Figure 6, the aft support shaft bearing 660 is a roller bearing with the fore bearing being the thrust bearing 656. In the example of Figure 7, the fore bearing 756 is the roller bearing, with the aft bearing 760 being the thrust bearing.

The above described reduction gears are in the form of epicyclic gearboxes in which the fan is driven via the carrier of a planetary configuration. However, it will be appreciated that the reduction gear could be a star configuration in which the planet gears are fixed, or a compound arrangement. These different configurations are well known in the art.

The described examples above include a low pressure spool having a low pressure turbine, a low pressure shaft and a low pressure compressor. It will be appreciated that the low pressure spool is considered low pressure in relation to the high pressure spool and could be an intermediate pressure spool in some instances. One example of this might be where the fan is taken to be a low pressure compressor in its own right.

The coupling which connects the fan shaft and fore drive arm of the carrier arrangement provides a means for mechanically isolating the gearbox from radial deflections and coupling loads in the fan shaft. In doing so, it is possible to reduce the requirements of the gear box and thus make it generally lighter.

The requirements of the coupling are that it must be generally torsionally rigid so that it can transfer the torque from the gearbox drive arm to the fan. However, the coupling should be radially compliant so that it can allow a predetermined amount of relative radial movement between the fan shaft and the drive arm. A further requirement may be that the coupling is generally axially stiff, however, this requirement will vary as to the support of the fan shaft and gearbox.

In the case of some of the examples discussed in connection with the drawings of the application, the fan shaft is axially retained by a thrust bearing aft of the gearbox, in which case the gearbox and fan shaft should be minimal in which case the coupling can be axially rigid.

Figure 3 shows a coupling 348 which generally comprises a conical section which extends from a first end 366 which attaches to the fan shaft to a second end 368 which couples to the fore drive arm 344 which in turn connects to the carrier 328.

The connection of the first end 366 of the coupling 348 is located axially between the fore bearing 356 and the gearbox. The coupling 348 extends radially outwards and downstream such that the coupling increases in diameter as it extends downstream. The expansion of the conical section, or diametric increase, is substantially constant along the axial direction so that the cone includes straight walls which lie at an angle of approximately 40 degrees to the principal axis. It will be appreciated that other angles may be appropriate in accordance with the engine architecture and requirements of the coupling.

The thickness of the wall generally reduces as the diameter increases so as to have a tapered appearance from the first end towards the second end. The thickness of wall may be such that it is provided with a substantially constant shear stress profile. By shear stress profile it is meant the component of stress which is coplanar with a material cross-section. In some examples, the constant stress is in the cross-section normal to the principal axis of the engine. The constant shear stress may be considered to be the force applied divided by the shear area.

It will be appreciated that despite the thickness being predominantly governed by a constant shear stress profile, the actual thickness may be locally increased in some places. The increase in thickness may be as a result of local stress concentrations such as where the coupling attaches to the fan shaft and or drive arm. Thus, as an example, it can be seen that the coupling is filleted or flared towards the first end and connection to the fan shaft to allow for a more robust connection to the fan shaft.

Figure 8 shows an alternative coupling 848. Here the coupling 848 includes a swept profile in the longitudinal section. The sweep is such that the radius of curvature is smallest towards the first end and increases as the coupling extends axially rearwards. The different radii of curvature are all centred radially inboard of the coupling and aft of the first end 866 which is connected to the fan shaft 812. The increase in the radius of the curvature is substantially constant so that the curvature of the sweep gradually reduces as it progresses axially rearwards. The latter half of the coupling includes a straight walled portion in the axial direction in which the increase in diameter is constant with increasing axial length.

The sweep provides a larger diameter coupling for the majority of the axial length which allows the thickness of the wall to be reduced whilst providing a suitable shear stress profile. In the described example, the outward sweep provides the coupling with a mean diameter which is radially larger than half the maximum radial diameter of the coupling.

The sweep may provide the coupling with a campanulate or bell-like profile.

In providing the sweep, the coupling diametrically increases along the length of the coupling. The rate of increase reduces along its length. In the example shown, over 50% of the diametric increase of the coupling from the first end to the second end occurs in the first 25% of the axial extent.

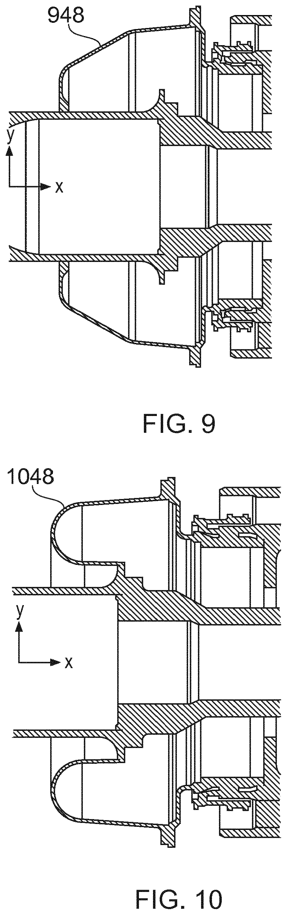

Figure 9 shows a further example of a coupling 948 in which the diametrical increase along the axial length is segmented. Thus, the radial growth of the coupling is concentrated towards the first end with a reducing rate of increase with axial length. A key difference in comparison to Figure 8 however, is that the diametric increase is segmented to provide a plurality of axially straight walled portions separated by curved portions. The curved portions have relatively small radii and provide a transition between two straighter portions. It will be appreciated that the straighter portions may include a slight curvature. Thus, there is a radial extension which extends normal to the principal axis of rotation, a first inclined portion which extends radially outwards and downstream a first angle relative to the principal axis of rotation, and a third section which is inclined to the principal axis of rotation at a second angle. The second angle is less than or shallower than the first angle. It will be appreciated that there may be further segments in the coupling, and the first segment which extends radially and normal to the axis of rotation, may be inclined upstream or downstream in some embodiments.

Figure 10 shows a further example of a coupling 1048 in which the coupling extends axially upstream of the first end before returning downstream to provide a u-bend profile. Thus, there is a first annular segment which extends from a connection flange which is attached to the fan shaft at the first end of the coupling. The annular segment extends parallel and upstream to the fan shaft and terminates in a first end of the u-bend segment. The u-bend segment terminates in a straight walled annular section which is inclined to the shaft in the cross section. The straight walled final segment terminates in a connection with the drive arm.

As noted above, the coupling includes a first end and a second end. The first end extends from the main body of the fan shaft. The second end connects to the gear train at a union. The union may be a bolted union as shown in the drawings, or may be any other which is commonly used in the industry. For example, the coupling may be welded to the output drive arm of the gear train. The second end of the coupling may be upstream of the gearbox fore housing bearing 340.

Each of the couplings described in the drawings connects to the carrier via a fore drive arm portion. The fore drive arm includes a radially extending flange which increases the diameter of the drive arm to coincide with the second end of the coupling. The drive arm and coupling are connected by a bolted union. The radially extending flange can be thought of as being substantially rigid in the radial direction.

The specific design of the coupling will be dependent on the general architecture of the engine to which it is to be employed. Some general considerations for designing the coupling follow.

The purpose of the coupling is to help reduce the transmission of radial and torsional excursions or angularity in the shaft into the gearbox. Such loading will increase the loads transmitted into the gearbox gears, bearings and supports which would need to be strengthened to carry the load. The additional and potentially unnecessary loading could easily represent a relatively large weight or longevity penalty. Thus, the first end of the coupling is located on a point of a shaft which has the least amount of radial and rotational movement or angularity in service.

The position of least amount of radial and rotational movement or angularity of the fan shaft will be dependent on the characteristics of the shaft, the shaft bearing supports and positions, and the position, configuration, support and torque required of the gearbox. Each of these will contribute to the deflection and shape of the shaft during different operating conditions. Thus, in selecting the point of least deflection it is more than likely necessary to use an iterative design process in which different configurations are modelled and simulated under different operating conditions.

Once the point of least deflection has been determined, the requirements and associated shape of the coupling can be calculated. It will be appreciated, that the point of least deflection may not actually be the absolute least point of deflection, but may taken to be a mean value of least deflection as taken over a particular operational envelope.

It will be understood that the invention is not limited to the described examples and embodiments and various modifications and improvements can be made without departing from the concepts described herein and the scope of the claims.

## Claims

1. A gas turbine engine, comprising:
a low pressure spool having a low pressure compressor (216) and a low pressure turbine (218) connected by a low pressure shaft (220);
a reduction gear train (232) having a sun gear (324), a carrier (328) having a plurality of planet gears (326) attached thereto, and a ring gear (330), wherein the sun gear is connected to the low pressure shaft, and the carrier or the ring gear provides an output drive;
a propulsive fan (212) mounted fore of the gear train;
a fan shafting arrangement (242) comprising a fan shaft (312) which is connected to the output drive of the gear train via a coupling (348), wherein the coupling includes a connection point to the fan shaft at a first end, and a connection point to the gear train at a second end, and wherein the first end and second end are axially separated and radially separated and the axial separation is greater than the radial separation, and wherein the coupling is torsionally rigid but flexible in the radial direction;
the fan shaft having two axially separated bearing locations so as to be supported by a first bearing and a second bearing which are axially separated, wherein the first end of the coupling attaches to the fan shaft between the first and second bearings;
**characterised in that**:
the fan shaft (312) further comprises a fan support shaft (318) which passes freely through the sun gear so as to have no direct contact therewith and as such passes through the centre of the gear train (232) along the axis of rotation of the gearbox and fan, and
the first end of the coupling (348) attaches to the fan shaft (312) between the first bearing and the gear train, and the second bearing is aft of the gear train.

2. A gas turbine engine as claimed in claim 1, wherein the profile of the coupling (348) in the longitudinal section relative to the principal axis of the engine includes an outward sweep such that the increase in radius of the coupling from the first end is greater than the axial separation from the first end.

3. A gas turbine engine as claimed in claim 2, wherein the curvature of the outward sweep is continuous.

4. A gas turbine engine as claimed in claim 3 wherein the curvature is greatest towards the first end.

5. A gas turbine engine as claimed in any preceding claim, wherein the profile of the coupling (348) has a predominantly constant shear stress profile.

6. A gas turbine engine as claimed in any preceding claim, wherein the reduction gear train (232) is an epicyclic gear box in which the output drive is the carrier, the sun gear (324) provides an input drive and the fan support shaft (318) passes through the centre of the sun gear.

7. A gas turbine engine as claimed in any preceding claim wherein the coupling (1048) includes a portion which extends axially forward of the first end.

8. A gas turbine engine as claimed in any preceding claim, wherein the output drive includes a fore drive arm (344) and an aft drive arm (346) which are located respectively forward and aft of the gear train (232), wherein the fore and aft drive arms connect to respective sides of the carrier (328), and wherein the fore drive arm includes a radial expansion which extends between the second end of the coupling and the carrier.

9. A gas turbine engine as claimed in any preceding claim, wherein the connection between the fan shaft (312) and coupling (348) at the first end is located at a point of least operational radial, rotational and/or angular deflection.

10. A gas turbine engine as claimed in any preceding claim, wherein the point of least operational radial, rotational and/or angular deflection is taken to be the point of mean least deflection over an operational envelope.

11. A gas turbine engine as claimed in any preceding claim, wherein the mean diameter of the coupling (348) is radially larger than half the maximum radial diameter of the coupling.

12. A gas turbine engine as claimed in any preceding claim, wherein the coupling (348) is axially and radially segmented, each segment having a straight section in longitudinal profile.

## Patentansprüche

1. Gasturbinenmotor, umfassend:
eine Niederdruckwelleneinheit mit einem Niederdruckverdichter (216) und einer Niederdruckturbine (218), die durch eine Niederdruckwelle (220) verbunden sind;
einen Untersetzungsgetriebestrang (232) mit einem Sonnenrad (324), einem Träger (328) mit einer Vielzahl von daran befestigten Planetenrädern (326) und einem Hohlrad (330), wobei das Sonnenrad mit der Niederdruckwelle verbunden ist und der Träger oder das Hohlrad einen Abtrieb bereitstellt;
einen Antriebslüfter (212), der am vorderen Ende des Getriebestrangs montiert ist;
eine Lüfterwellenanordnung (242), die eine Lüfterwelle (312) umfasst, die über eine Kupplung (348) mit dem Abtrieb des Getriebestrangs verbunden ist, wobei die Kupplung einen Verbindungspunkt mit der Lüfterwelle an einem ersten Ende und einen Verbindungspunkt mit dem Getriebestrang an einem zweiten Ende aufweist, und wobei das erste Ende und das zweite Ende axial getrennt und radial getrennt sind und der axiale Abstand größer als der radiale Abstand ist, und wobei die Kupplung drehsteif, aber in radialer Richtung flexibel ist;
wobei die Lüfterwelle zwei axial getrennte Lagerstellen aufweist, so dass sie von einem ersten Lager und einem zweiten Lager getragen wird, die axial getrennt sind, wobei das erste Ende der Kupplung an der Lüfterwelle zwischen dem ersten und dem zweiten Lager befestigt ist;
**dadurch gekennzeichnet, dass**:
die Lüfterwelle (312) des Weiteren eine Lüftertragwelle (318) umfasst, die frei durch das Sonnenrad verläuft, so dass sie keinen direkten Kontakt damit hat und als solche durch die Mitte des Getriebestrangs (232) entlang der Drehachse des Getriebes und des Lüfters verläuft, und das erste Ende der Kupplung (348) an der Lüfterwelle (312) zwischen dem ersten Lager und dem Getriebestrang befestigt ist, und das zweite Lager hinter dem Getriebestrang liegt.

2. Gasturbinenmotor nach Anspruch 1, wobei das Profil der Kupplung (348) im Längsschnitt relativ zur Hauptachse des Motors einen nach außen gerichteten Bogen aufweist, sodass die Zunahme des Radius der Kupplung vom ersten Ende größer als der axiale Abstand vom ersten Ende ist.

3. Gasturbinenmotor nach Anspruch 2, wobei die Krümmung des nach außen gerichteten Bogens kontinuierlich ist.

4. Gasturbinenmotor nach Anspruch 3, wobei die Krümmung zum ersten Ende hin am größten ist.

5. Gasturbinenmotor nach einem vorstehenden Anspruch, wobei das Profil der Kupplung (348) ein überwiegend konstantes Scherspannungsprofil aufweist.

6. Gasturbinenmotor nach einem vorstehenden Anspruch, wobei der Untersetzungsgetriebestrang (232) ein Planetengetriebe ist, bei dem der Abtrieb der Träger ist, das Sonnenrad (324) einen Antrieb bereitstellt und die Lüftertragwelle (318) durch die Mitte des Sonnenrades verläuft.

7. Gasturbinenmotor nach einem vorstehenden Anspruch, wobei die Kupplung (1048) einen Abschnitt aufweist, der sich von dem ersten Ende axial vorwärts erstreckt.

8. Gasturbinenmotor nach einem vorstehenden Anspruch, wobei der Abtrieb einen vorderen Antriebsarm (344) und einen hinteren Antriebsarm (346) aufweist, die jeweils vor und hinter dem Getriebestrang (232) angeordnet sind, wobei der vordere und der hintere Antriebsarm mit den jeweiligen Seiten des Trägers (328) verbunden sind, und wobei der vordere Antriebsarm eine radiale Ausdehnung aufweist, die sich zwischen dem zweiten Ende der Kupplung und dem Träger erstreckt.

9. Gasturbinenmotor nach einem vorstehenden Anspruch, wobei die Verbindung zwischen der Lüfterwelle (312) und der Kupplung (348) am ersten Ende an einem Punkt der geringsten betriebsbedingten radialen, rotierenden und/oder winkligen Auslenkung angeordnet ist.

10. Gasturbinenmotor nach einem vorstehenden Anspruch, wobei der Punkt der geringsten betriebsbedingten radialen, rotierenden und/oder winkligen Auslenkung als der Punkt der geringsten mittleren Auslenkung über einer betriebsbedingten Hüllbahn angenommen wird.

11. Gasturbinenmotor nach einem vorstehenden Anspruch, wobei der mittlere Durchmesser der Kupplung (348) radial größer als die Hälfte des maximalen radialen Durchmessers der Kupplung ist.

12. Gasturbinenmotor nach einem vorstehenden Anspruch, wobei die Kupplung (348) axial und radial segmentiert ist, wobei jedes Segment einen geraden Abschnitt im Längsprofil aufweist.

## Revendications

1. Moteur à turbine à gaz, comprenant :
une bobine basse pression possédant un compresseur basse pression (216) et une turbine basse pression (218) reliés par un arbre basse pression (220) ;
un train d'engrenages réducteur (232) possédant un engrenage planétaire (324), un support (328) possédant une pluralité d'engrenages satellites (326) attachés à celui-ci, et une couronne dentée (330), ledit engrenage planétaire étant raccordé à l'arbre basse pression et ledit support ou ladite couronne dentée fournissant un entraînement de sortie ;
une soufflante propulsive (212) montée à l'avant du train d'engrenages ;
un agencement d'arbre de soufflante (242) comprenant un arbre de soufflante (312) qui est raccordé à l'entraînement de sortie du train d'engrenages par l'intermédiaire d'un couplage (348), ledit couplage comprenant un point de raccordement à l'arbre de soufflante au niveau d'une première extrémité, et un point de raccordement au train d'engrenages au niveau d'une seconde extrémité, et ladite première extrémité et ladite seconde extrémité étant séparées axialement et radialement et ladite séparation axiale étant supérieure à la séparation radiale, et ledit couplage étant rigide en torsion mais souple dans la direction radiale ;
ledit arbre de soufflante possédant deux emplacements de palier séparés axialement de façon à être supportés par un premier palier et un second palier qui sont séparés axialement, ladite première extrémité de couplage se fixant à l'arbre de soufflante entre les premier et second paliers ;
**caractérisé en ce que** :
l'arbre de soufflante (312) comprend en outre un arbre de support de soufflante (318) qui passe librement à travers l'engrenage planétaire de façon à ne pas être en contact direct avec lui et passe en tant que tel à travers le centre du train d'engrenages (232) le long de l'axe de rotation de la boîte d'engrenages et de la soufflante, et la première extrémité du couplage (348) se fixant à l'arbre de soufflante (312) entre le premier roulement et le train d'engrenages, et le second palier étant à l'arrière du train d'engrenages.

2. Moteur à turbine à gaz selon la revendication 1, ledit profil du couplage (348) dans la section longitudinale par rapport à l'axe principal du moteur comprenant une flèche vers l'extérieur de sorte que l'augmentation du rayon du couplage à partir de la première extrémité soit supérieure à la séparation axiale à partir de la première extrémité.

3. Moteur à turbine à gaz selon la revendication 2, ladite courbure de la flèche vers l'extérieur étant continue.

4. Moteur à turbine à gaz selon la revendication 3, ladite courbure étant la plus grande vers la première extrémité.

5. Moteur à turbine à gaz selon l'une quelconque des revendications précédentes, ledit profil de couplage (348) possédant un profil de contrainte de cisaillement principalement constant.

6. Moteur à turbine à gaz selon l'une quelconque des revendications précédentes, ledit train d'engrenages réducteur (232) étant une boîte d'engrenages épicycloïdale dans laquelle l'entraînement de sortie est le support, ledit engrenage planétaire (324) fournissant un entraînement d'entrée et ledit arbre de support de soufflante (318) passant par le centre de l'engrenage planétaire.

7. Moteur à turbine à gaz selon l'une quelconque des revendications précédentes, ledit couplage (1048) comprenant une partie qui s'étend axialement vers l'avant de la première extrémité.

8. Moteur à turbine à gaz selon l'une quelconque des revendications précédentes, ledit entraînement de sortie comprenant un bras d'entraînement avant (344) et un bras d'entraînement arrière (346) qui sont situés respectivement vers l'avant et vers l'arrière du train d'engrenages (232), les bras d'entraînement avant et arrière se raccordant aux côtés respectifs du support (328), et ledit bras d'entraînement avant comprenant une expansion radiale qui s'étend entre la seconde extrémité du couplage et le support.

9. Moteur à turbine à gaz selon l'une quelconque des revendications précédentes, ledit raccord entre l'arbre de soufflante (312) et le couplage (348) au niveau de la première extrémité étant située au niveau du point de moindre déviation radiale, rotationnelle et/ou angulaire fonctionnelle.

10. Moteur à turbine à gaz selon l'une quelconque des revendications précédentes, ledit point de moindre déviation radiale, rotationnelle et / ou angulaire étant considéré en tant que point de moindre déviation moyenne sur une enveloppe de fonctionnement.

11. Moteur à turbine à gaz selon l'une quelconque des revendications précédentes, ledit diamètre moyen du couplage (348) étant radialement supérieur à la moitié du diamètre radial maximal du couplage.

12. Moteur à turbine à gaz selon l'une quelconque des revendications précédentes, ledit couplage (348) étant segmenté axialement et radialement, chaque segment possédant une section droite en profil longitudinal.
